# EUROPÄISCHE PATENTSCHRIFT

(11) **EP 2 387 519 B1**
(45) Veröffentlichungstag und Bekanntmachung des Hinweises auf die Patenterteilung: **06.08.2014**
(21) Anmeldenummer: 10703822.6
(22) Anmeldetag: 13.01.2010
(51) Int. Cl.: B60R 21/231

(54) **INSASSENRÜCKHALTEEINRICHTUNG**
PASSENGER RESTRAINT SYSTEM
SYSTÈME DE RETENU DE PASSAGERS

(30) Priorität: 15.01.2009 DE 102009005043
(43) Veröffentlichungstag der Anmeldung: 23.11.2011
(73) Patentinhaber: Takata AG, 63743 Aschaffenburg (DE)
(72) Erfinder: KOMOLL, Olav, 13156 Berlin (DE); HEUSCHMID, Rainer, 89075 Ulm (DE); GRUBE, Mathias, 65428 Rüsselsheim (DE)
(74) Vertreter: Müller, Wolfram Hubertus
(86) Internationale Anmeldenummer: PCT/EP2010/050324
(87) Internationale Veröffentlichungsnummer: WO 2010/081811

(56) Entgegenhaltungen:
- EP-A1- 1 607 273
- DE-A1- 19 904 100
- DE-A1-102005 001 597
- US-A- 3 897 961
- US-A- 5 470 103
- US-B1- 6 431 586

## Beschreibung

Die Erfindung betrifft eine Insassenrückhalteeinrichtung für ein Kraftfahrzeug gemäß dem Oberbegriff des Anspruchs 1 sowie ein Verfahren zur Auslösung einer solchen Insassenrückhalteeinrichtung, siehe US 6 431 586 B1.

Eine solche Insassenrückhalteeinrichtung umfasst üblicherweise einen ersten Gassack, der zum Schutz eines Insassen, der einen Sitz in Form eines Fahrer- oder eines Beifahrersitzes des Kraftfahrzeuges bestimmungsgemäß belegt, mit Gas aufblasbar ist, wobei der erste Gassack dazu eingerichtet und vorgesehen ist, in einem nicht aufgeblasenen Zustand in einem Lenkrad oder einer Instrumententafel des Kraftfahrzeuges angeordnet zu sein sowie einen zweiten Gassack, der zum Schutz des Insassen mit Gas aufblasbar ist.

Bei einem Frontal-/Schrägaufprall besteht die Gefahr, dass der Kopf des zu schützenden Insassen in dem Dreiecksbereich, an dem die A-Säule, die Windschutzscheibe und der Dachrahmen aneinander angrenzen, mit der A-Säule kollidiert, insbesondere, wenn sich die A-Säule sehr weit in Richtung des Insassen erstreckt. Daraus resultieren überhöhte Nackenmomente und Nackendruckkräfte. Ausladende A-Säulen kommen hauptsächlich bei Cabrios/Roadstern zum Einsatz.

Der Erfindung liegt daher das Problem zugrunde, eine Insassenrückhalteeinrichtung im Hinblick auf die vorstehende Problematik weiterzubilden, um die genannten Nachteile zu vermeiden.

Dieses Problem wird durch eine Insassenrückhalteeinrichtung mit den Merkmalen des Anspruchs 1 gelöst.

Danach ist vorgesehen, dass der zweite Gassack dazu ausgebildet ist, sich in einem aufgeblasenen Zustand mit einem der Fahrzeugfront zugewandten Randbereich entlang der A-Säule des Kraftfahrzeuges zu erstrecken.

So kann erwirkt werden, dass beim Schrägaufprall der Kopf des Insassen an dem zweiten Gassack entlang rutscht, anstatt in dem besagten Bereich gegen die A-Säule zu schlagen..

Der zweite Gassack ist dazu eingerichtet und vorgesehen, sich im aufgeblasenen Zustand mit dem besagten Randbereich an die A-Säule anzuliegen. Der zweite Gassack ist dabei dazu eingerichtet und vorgesehen, sich im aufgeblasenen Zustand mit seinem Randbereich an einen entlang der vertikalen Fahrzeugachse erstreckten, der seitlichen Kraftfahrzeugkarosserie zugewandten Randbereich des aufgeblasenen ersten Gassackes anzulegen, so dass der erste und der zweite Gassack gemeinsam die A-Säule zumindest abschnittsweise vom Insassen abschirmen.

Zum Auslösen den Gassäcken zugeordneter Gasgeneratoren ist bevorzugt eine Steuerelektronik vorgesehen, die mit einem Sensormittel zusammenwirkt, dass eine Vielzahl einzelner, unterschiedlicher Sensoren umfassen kann.

Das Sensormittel dient zum Erfassen einer auf die Fahrzeugfront des Kraftfahrzeuges infolge einer Kollision einwirkenden Kraft, die entlang einer Kraftrichtung orientiert ist. Dabei ist dass Sensormittel vorzugsweise dazu eingerichtet und vorgesehen, die Neigung jener Kraftrichtung gegenüber der Fahrzeuglängsachse zu erfassen. Hierzu kann das Sensormittel eine Auswerteeinheit umfassen, die entsprechende Signale einzelner Sensoren zu der besagten Neigung umsetzt. Die Steuerelektronik löst dann die Gasgeneratoren in Abhängigkeit von jener Neigung (Winkel zwischen Kraftrichtung und Fahrzeuglängsachse) aus. Bei einem Frontalaufprall beträgt die Neigung 0°, bei einem Seitenaufprall 90°.

In einer Variante der Erfindung ist die Steuerelektronik dazu eingerichtet und vorgesehen, sowohl den ersten als auch den zweiten Gasgenerator zum Aufblasen der beiden Gassäcke auszulösen, wenn das Sensormittel eine Kollision erfasst, bei der die Neigung der Kraftrichtung gegenüber der Fahrzeuglängsachse kleiner oder gleich 30° ist. Dabei ist die Steuerelektronik insbesondere dazu ausgebildet, den erste und den zweiten Gasgenerator zur gleichen oder zu unterschiedlichen Zeiten auszulösen, so dass die beiden zugeordneten Gassäcke möglichst zu einem Zeitpunkt bzw. Zeitpunkten aufgeblasen werden, der einen Schutz des Insassen gewährleistet.

Eine erfindungsgemäße Insassenrückhalteeinrichtung ist somit vorzugsweise dazu ausgebildet, Schutz bei einem Frontalaufprall mit Schrägkomponente zu bewirken, wobei insbesondere eine gleichzeitige Aktivierung von Front- und Seitenairbag(s) (erster und zweiter Gassack sowie ggf. dritter Gassack) vorgesehen ist. Des Weiteren kann eine solche Insassenrückhalteeinrichtung dazu eingerichtet und vorgesehen sein, Schutz bei einem Seitenaufprall mit Frontalkomponente zu bieten, wobei insbesondere eine gleichzeitige Aktivierung von Front-und Seitenairbags (erster und zweiter Gassack sowie ggf. dritter Gassack) vorgesehen ist. Vorzugsweise beträgt der Winkel gegenüber der Fahrzeuglängsachse (Aufprallwinkel) bis zu ungefähr 30° (siehe oben). Ein weiterer Gedanke der Erfindung besteht insbesondere darin, die Gassäcke so auszulösen bzw. so im Kraftfahrzeug anzuordnen, dass der Insasse bei einem Crash vor verletzungsträchtigen Kontakten mit Elementen des Fahrzeuges (Innenraum) geschützt wird.

In einer Ausführungsform ist der zweite Gassack dazu ausgebildet, in einem nicht aufgeblasenen Zustand in einer dem Sitz zugeordneten seitlichen Kraftfahrzeugtür angeordnet zu werden, insbesondere unterhalb einer Fensterbrüstung bzw. eines Fensterausschnitts jener Kraftfahrzeugtür.

In einer weiteren Ausführungsform ist ein dritter Gassack vorgesehen, der dazu ausgebildet ist, in einem nicht aufgeblasenen Zustand in dem Sitz angeordnet zu sein, und zwar insbesondere im Bereich einer der besagten Tür zugewandten Lehnenwange des Sitzes, wobei der dritte Gassack bevorzugt dazu ausgebildet ist, sich in einem aufgeblasenen Zustand entlang der Kraftfahrzeugtür zu erstrecken. Der dritte Gassack kann dabei einen Thorax- und/oder Beckenschutz für den Insassen bereitstellen. Der zweite Gassack ist vorzugsweise zum Schutz des Kopfes vorgesehen und erstreckt sich entsprechend auf Höhe des Kopfes des zu schützenden Insassen vor dem Fenster der seitlichen Kraftfahrzeugtür.

Bevorzugt ist die Steuerelektronik dazu eingerichtet und vorgesehen, einen dem dritten Gassack zugeordneten dritten Gasgenerator zum Aufblasen des dritten Gassackes auszulösen, wenn das Sensormittel eine Kollision erfasst, bei der die Neigung der Kraftrichtung gegenüber der Fahrzeuglängsachse kleiner oder gleich 30° ist.

Auf diese Weise wird also insbesondere beim Schrägaufprall der bspw. türintegrierte zweite Gassack, insbesondere in Form eines Kopfairbags, und der dritte Gassack, insbesondere in Form eines sitzintegrierten Seitenairbags, zusammen mit dem am Lenkrad oder der Instrumententafel angeordneten ersten Gassack aktiviert, so dass anstelle eines Kontaktes des Kopfes mit der A-Säule der Kopf an dem zweiten Gassack entlang rutscht. Durch die Zündung des Seitenschutzsystems (zweiter und optionaler dritter Gassack) wird eine Reduzierung der seitlichen Bewegung des Insassen erreicht, was den Effekt des Vorbeirutschens an der A-Säule begünstigt.

Des Weiteren wird das erfindungsgemäße Problem durch ein Verfahren zum Auslösen einer Insassenrückhalteeinrichtung gemäß den Merkmalen des Anspruchs 9 gelöst. Danach ist vorgesehen: Erfassen des Winkels zwischen einer Kraftrichtung einer auf die Fahrzeugfront des Kraftfahrzeuges infolge einer Kollision einwirkenden Kraft und der Fahrzeuglängsachse, wobei im Falle einer Neigung kleiner gleich 30° der erste und der zweite Gassack aufgeblasen werden.

Bevorzugt wird im Falle eines Winkels kleiner gleich 30° zusätzlich ein weiterer, dritter Gassack aufgeblasen, der in einem nicht aufgeblasenen Zustand in dem Sitz angeordnet ist, insbesondere in einer Lehnenwange, so dass sich der dritte Gassack im aufgeblasenen Zustand entlang der Kraftfahrzeugtür erstreckt und zwar zwischen dem Insassen und jener Tür.

Weitere Vorteile der Erfindung sollen anhand der nachfolgenden Figurenbeschreibungen von Ausführungsbeispielen verdeutlicht werden. Es zeigen:

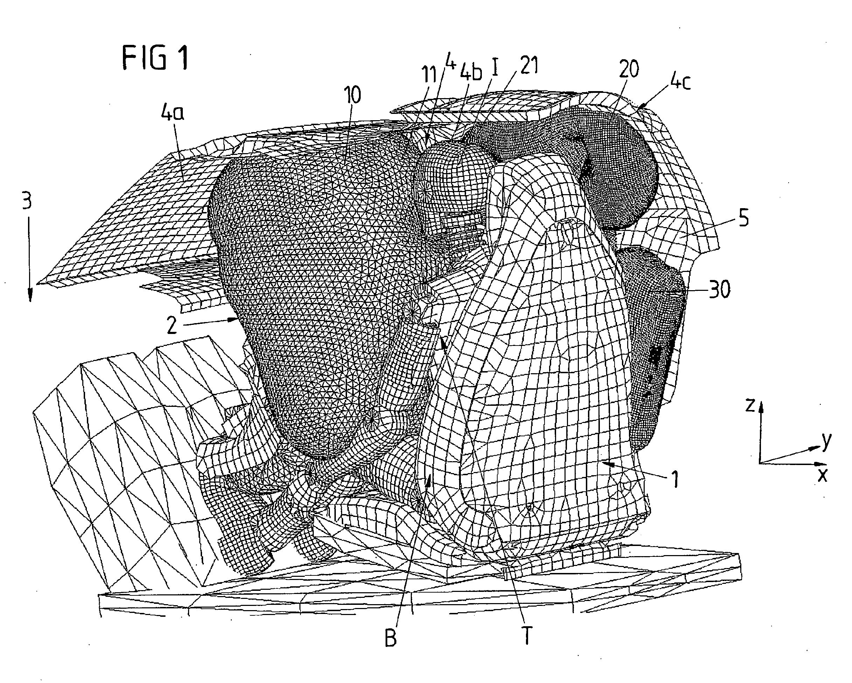

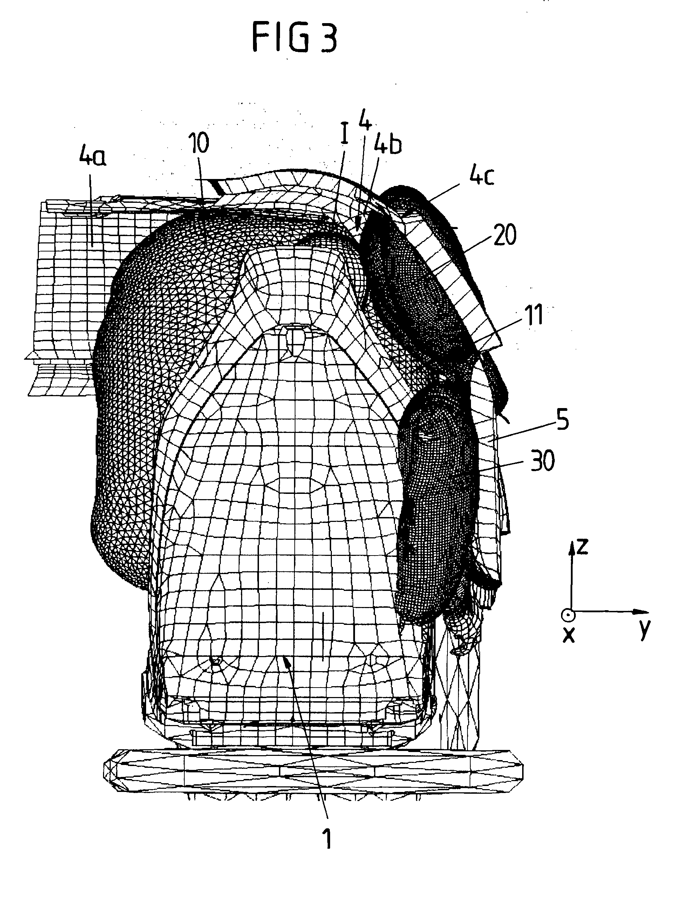

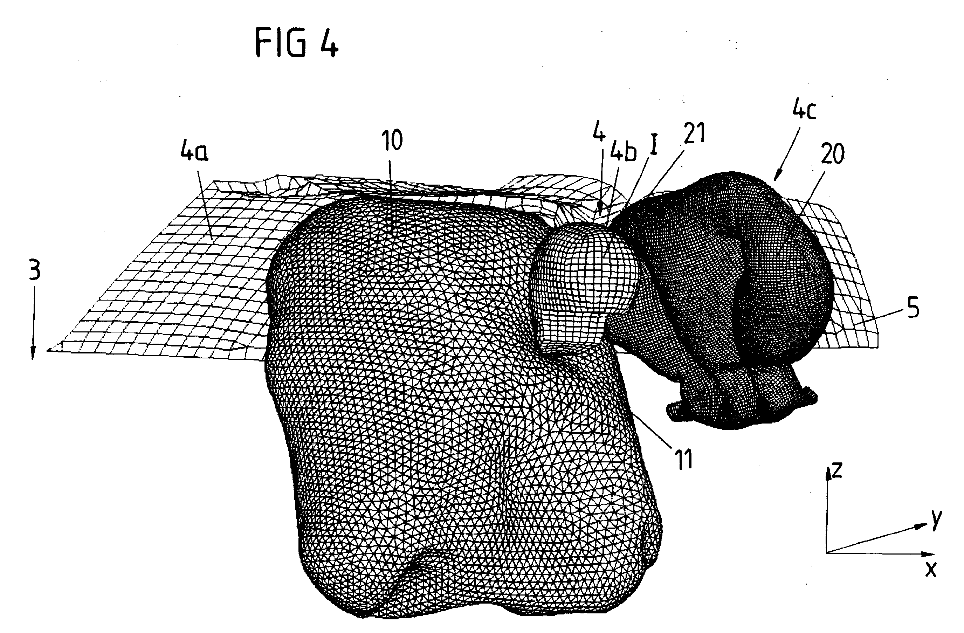

- Fig. 1-4:: perspektivische Ansichten einer erfindungsgemäßen Insassenrückhalteeinrichtung.

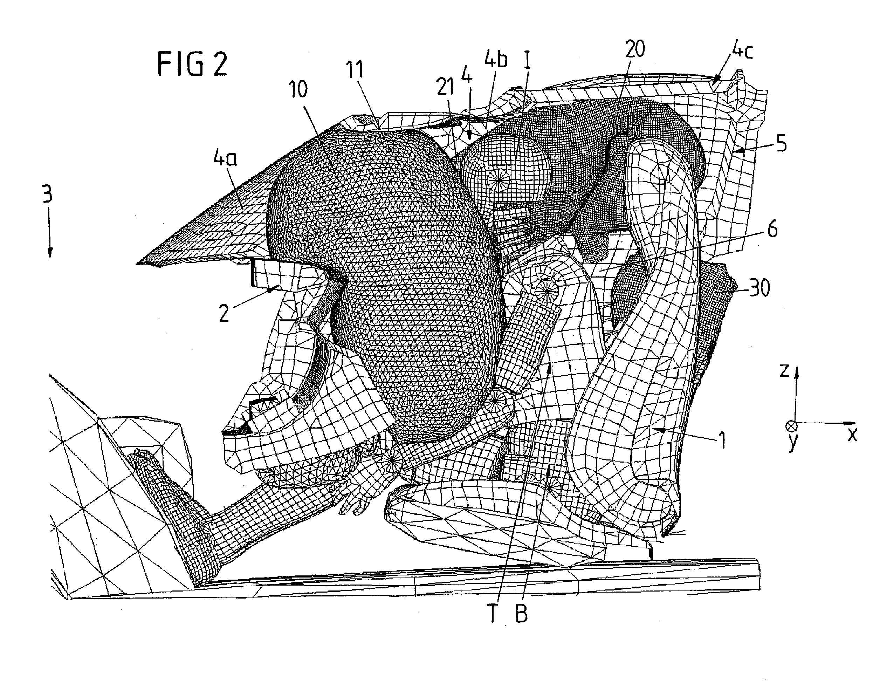

Figur 1 zeigt im Zusammenhang mit den Figuren 2 bis 4 perspektivische Ansichten eine erfindungsgemäße Insassenrückhalteeinrichtung 1.

Die Figuren 1 bis 4 zeigen einen Insassen 1, der einen Sitz 1 in Form eines Beifahrersitzes bestimmungsgemäß belegt, so dass entlang der Fahrzeugquerachse y neben dem Insassen I eine Kraftfahrzeugtür 5 entlang der x-z-Ebene verläuft, an die sich entlang der Fahrzeuglängsachse x eine A-Säule 4 anschließt, die entlang der Fahrzeuglängsachse x vor dem Insassen I angeordnet ist. An jene A-Säule 4 schließt sich entlang der Fahrzeugquerachse y eine vordere Windschutzscheibe 4a an, die dem Insassen I entlang der Fahrzeuglängsachse x zugewandt ist. Entlang der Fahrzeuglängsachse x geht von einem oberen Ende 4b der A-Säule 4 (bezogen auf die vertikale Fahrzeugachse z) ein Dachholm 4c ab, der oberhalb der Kraftfahrzeugtür 5 verläuft.

Bei einem Frontalaufprall, insbesondere bei einem Schrägaufprall, besteht die Gefahr, dass der Insasse I an einem einzelnen, ersten Gassack 10 in Form eines Kopfairbags, der aus der Instrumententafel 2 heraus entfaltet wird, um Energie des Insassen I entlang der Fahrzeuglängsachse x zu absorbieren, vorbei gleitet und gegen einen Abschnitt der A-Säule 4 stößt, der sich entlang der Windschutzscheibe 4a zum Dachholm 4c hin erstreckt.

Um dies zu verhindern, wird bei einem Schrägaufprall zumindest ein zweiter Gassack 20 je nach zeitlichem Verlauf der Insassenbewegung zeitgleich oder zeitversetzt aktiviert. Dieser weist im aufgeblasenen Zustand einen entlang der A-Säule 4 verlaufenden Randbereich 21 auf, der sich möglichst eng an die A-Säule 4 anschmiegt. Somit wird erreicht, dass der Insasse I am zweiten Gassack 20 entlang rutschen kann, so dass er auf den ersten Gassack 10 auftrifft und nicht auf die schräg dahinter erstreckte A-Säule 4.

Optional kann dies durch einen dritten Gassack 30 unterstützt werden, bei dem es sich um einen sitzintegrierten Seitengassack handeln kann, der bspw. zum Schutz des Thorax T und/oder des Beckens B des Insassen I ausgebildet sein kann. Vorzugsweise erstreckt sich dieser dritte Gassack 30 also in der z-x-Ebene zwischen dem Insassen I und der besagten Kraftfahrzeugtür 5.

## Patentansprüche

1. Insassenrückhalteeinrichtung für ein Kraftfahrzeug, mit
- einem ersten Gassack (10), der zum Schutz eines Insassen (I), der einen Sitz (1) in Form eines Fahrer- oder eines Beifahrersitzes des Kraftfahrzeuges bestimmungsgemäß belegt, mit Gas aufblasbar ist, wobei der erste Gassack (10) dazu ausgebildet ist, in einem nicht aufgeblasenen Zustand in einem Lenkrad oder einer Instrumententafel (2) des Kraftfahrzeuges angeordnet zu werden, und
- einem zweiten Gassack (20), der zum Schutz des Insassen (I) mit Gas aufblasbar ist, wobei der zweite Gassack (20) dazu ausgebildet ist, sich in einem aufgeblasenen Zustand mit einem der Fahrzeugfront (3) zugewandten Randbereich (21) entlang der A-Säule (4) des Kraftfahrzeuges zu erstrecken,
**dadurch gekennzeichnet,**
**dass** der zweite Gassack (20) im aufgeblasenen Zustand einen entlang der A-Säule (4) verlaufenden Randbereich (21) aufweist, der sich eng an die A-Säule (4) anschmiegt, so dass der Insasse (I) am zweiten Gassack (20) entlang rutschen kann, um auf den ersten Gassack 10 aufzutreffen und nicht auf die schräg dahinter erstreckte A-Säule (4),
und wobei der zweite Gassack (20) dazu eingerichtet und vorgesehen ist, sich im aufgeblasenen Zustand mit seinem Randbereich (21) an einen entlang der vertikalen Fahrzeugachse erstreckten, einer seitlichen Kraftfahrzeugkarosserie zugewandten Randbereich des aufgeblasenen ersten Gassackes (10) anzulegen, so dass der erste und der zweite Gassack (10, 20) gemeinsam die A-Säule (4) zumindest abschnittsweise zum Schutz des Insassen (I) verdecken.

2. Insassenrückhalteeinrichtung nach einem der vorhergehenden Ansprüche, **gekennzeichnet durch** eine Steuerelektronik, die dazu ausgebildet ist, einen den ersten Gassack (10) zugeordneten ersten Gasgenerator zum Aufblasen des ersten Gassackes (10) und einen dem zweiten Gassack (20) zugeordneten zweiten Gasgenerator zum Aufblasen des zweiten Gassackes auszulösen.

3. Insassenrückhalteeinrichtung nach einem der vorhergehenden Ansprüche, **gekennzeichnet durch** ein Sensormittel zum Erfassen einer auf die Fahrzeugfront (3) des Kraftfahrzeuges infolge einer Kollision entlang einer Kraftrichtung einwirkenden Kraft, wobei das Sensormittel insbesondere dazu ausgebildet ist, die Neigung jener Kraftrichtung gegenüber der Fahrzeuglängsachse (x) zu erfassen.

4. Insassenrückhalteeinrichtung nach Anspruch 3, **dadurch gekennzeichnet, dass** die Steuerelektronik dazu eingerichtet und vorgesehen ist, sowohl den ersten als auch den zweiten Gasgenerator (10, 20) zum Aufblasen der beiden Gassäcke (10, 20) auszulösen, wenn das Sensormittel eine Kollision erfasst, bei der die Neigung der Kraftrichtung gegenüber der Fahrzeuglängsachse kleiner oder gleich 30° ist.

5. Insassenrückhalteeinrichtung nach Anspruch 4, **dadurch gekennzeichnet, dass** die Steuerelektronik dazu ausgebildet ist, den ersten und den zweiten Gasgenerator zur gleichen Zeit oder zeitversetzt auszulösen.

6. Insassenrückhalteeinrichtung nach einem der vorhergehenden Ansprüche, **dadurch gekennzeichnet, dass** der zweite Gassack (20) dazu ausgebildet ist, in einem nicht aufgeblasenen Zustand in einer dem Sitz (1) zugeordneten seitlichen Kraftfahrzeugtür (5) angeordnet zu werden, insbesondere unterhalb einer Fensterbrüstung (6) jener Kraftfahrzeugtür (5).

7. Insassenrückhalteeinrichtung nach einem der vorhergehenden Ansprüche, **gekennzeichnet durch** einen dritten Gassack (30), der dazu ausgebildet ist, in einem nicht aufgeblasenen Zustand in dem Sitz (1) angeordnet zu sein, wobei der dritte Gassack (30) dazu ausgebildet ist, sich in einem aufgeblasenen Zustand entlang der Kraftfahrzeugtür (5) zu erstrecken.

8. Insassenrückhalteeinrichtung nach einem der Ansprüche 4 bis 7, **dadurch gekennzeichnet, dass** die Steuerelektronik dazu ausgebildet ist, einen dem dritten Gassack (30) zugeordneten dritten Gasgenerator zum Aufblasen des dritten Gassackes (30) auszulösen, wenn das Sensormittel eine Kollision erfasst, bei der die Neigung der Kraftrichtung gegenüber der Fahrzeuglängsachse kleiner oder gleich 30° ist.

9. Verfahren zum Auslösen einer Insassenrückhalteeinrichtung nach einem der vorangegangenen Ansprüche, mit den Schritten:
- Erfassen der Neigung einer Kraftrichtung einer auf die Fahrzeugfront (3) des Kraftfahrzeuges infolge einer Kollision einwirkenden Kraft gegenüber der Fahrzeuglängsachse (x),
- Im Falle einer Neigung kleiner gleich 30°: Aufblasen des ersten und des zweiten Gassackes (10, 20),
- wobei der zweite Gassack (20) im aufgeblasenen Zustand einen entlang der A-Säule (4) verlaufenden Randbereich (21) aufweist, der sich eng an die A-Säule (4) anschmiegt, so dass der Insasse I am zweiten Gassack 20 entlang rutschen kann, um auf den ersten Gassack 10 aufzutreffen und nicht auf die schräg dahinter erstreckte A-Säule (4),
- und wobei der zweite Gassack (20) dazu eingerichtet und vorgesehen ist, sich im aufgeblasenen Zustand mit seinem Randbereich (21) an einen entlang der vertikalen Fahrzeugachse erstreckten, einer seitlichen Kraftfahrzeugkarosserie zugewandten Randbereich des aufgeblasenen ersten Gassackes (10) anzulegen, so daß der erste und zweite Gassack gemeinsam die A-Säule zumindest abschnittweise zum Schutz des Insassen verdecken.

10. Verfahren zum Auslösen einer Insassenrückhalteeinrichtung nach Anspruch 9 wobei im Falle einer Neigung kleiner gleich 30 ° zusätzlich ein weiterer, dritter Gassack (30) aufgeblasen wird, der in einem nicht aufgeblasenen Zustand in dem Sitz (1) angeordnet ist, wobei sich der dritte Gassack (30) im aufgeblasenen Zustand entlang der Kraftfahrzeugtür (5) erstreckt.

## Claims

1. Occupant restraint device for a motor vehicle comprising
- a first airbag (10), which can be inflated with gas to protect an occupant (I) who occupies a seat (1) in form of a driver's seat or a front passenger seat of the motor vehicle as intended, wherein the first airbag (10) is designed to be arranged in a steering wheel or instrument panel (2) of the motor vehicle in its non-inflated status, and
- a second airbag (20), which can be inflated with gas to protect the occupant (I), wherein the second airbag (20) is designed such that said airbag extends with an edge area (21) thereof facing the vehicle front (3) in an inflated status along the A-pillar (4) of the motor vehicle,
**characterized in that**
the second airbag (20) comprises in the inflated state an edge area (21) extending along the A-pillar (4), wherein said edge area (21) lies tightly against the A-pillar (4) so that the occupant (I) can slide along the second airbag (20) so that said occupant strikes the first airbag (10) and not the A-pillar (4) extending slantwise behind,
and wherein the second airbag (20) is arranged and adapted to lie with its edge area (21) in the inflated state against an edge area of the inflated first airbag (10) extending along the vertical vehicle axis and facing a lateral motor vehicle body such that the first and the second airbags (10, 20) cover together at least sectionally the A-pillar (4) for protecting the occupant (1).

2. Occupant restraint device according to any one of the preceding claims **characterized by** control electronics designed to trigger a first gas generator assigned to the first airbag (10) for inflating the first airbag (10) and a second gas generator assigned to the second airbag (20) for inflating the second airbag.

3. Occupant restraint device according to one of the preceding claims **characterized by** sensor means for recording the force acting on the vehicle front (3) of the motor vehicle along a force direction due to a collision, wherein the sensor means are in particular designed to record the inclination of said force direction relative to the vehicle longitudinal axis (x).

4. Occupant restraint device according to claim 3, **characterized in that** the control electronics are arranged and provided to trigger the first as well as the second gas generator (10, 20) for inflating the two airbags (10, 20), when the sensor means record a collision, in which the inclination of the force direction relative to the vehicle longitudinal axis is smaller than or equal to 30°.

5. Occupant restraint device according to claim 4, **characterized in that** the control electronics are designed to trigger the first and the second gas generator at the same time or with a time delay.

6. Occupant restraint device according to any one of the preceding claims, **characterized in that** the second airbag (20) is designed to be arranged in a non-inflated state in a lateral motor vehicle door (5) assigned to the seat (1), in particular below a window parapet (6) of said motor vehicle door (5).

7. Occupant restraint device according to any one of the preceding claims **characterized by** a third airbag (30), which is designed to be arranged in the seat (1) in a non-inflated state, wherein the third airbag (30) is designed to extend along the motor vehicle door (5) in an inflated state (10).

8. Occupant restraint device according to any one of the claims 4 to 7, **characterized in that** the control electronics are designed to trigger a third gas generator assigned to the third airbag (30) for inflating the third airbag (30), when the sensor means record a collision, in which the inclination of the force direction relative to the vehicle longitudinal axis is smaller than or equal to 30°.

9. Method for triggering an occupant restraint device according to any one of the preceding claims with the steps:
- recording the inclination of a force direction relative to the vehicle longitudinal axis (x) of the force acting on the vehicle front (3) of the motor vehicle due to a collision,
- in case of an inclination smaller than or equal to 30°: inflating the first and the second airbag (10, 20),
- wherein the second airbag (20) comprises in the inflated state an edge area (21) extending along the A-pillar (4), wherein said edge area (21) lies tightly against the A-pillar (4) so that the occupant (I) can slide along the second airbag (20) so that said occupant strikes the first airbag (10) and not the A-pillar (4) extending slantwise behind,
- and wherein the second airbag (20) is arranged and adapted to lie with its edge area (21) in the inflated state against an edge area of the inflated first airbag (10) extending along the vertical vehicle axis and facing a lateral motor vehicle body such that the first and the second airbags (10, 20) cover together at least sectionally the A-pillar (4) for protecting the occupant.

10. Method for triggering an occupant restraint device according to claim 9, wherein in case of an inclination smaller than or equal to 30° in addition a further, third airbag (30) is inflated, which is arranged in the seat (1) in a non-inflated state, wherein the third airbag (30) extends along the motor vehicle door (5) in the inflated state.

## Revendications

1. Système de retenue des occupants d'un véhicule automobile, comportant
- un premier coussin gonflable (10) qui, pour la protection d'un occupant du véhicule (I) qui est assis sur un siège (1) sous la forme d'un siège conducteur ou d'un siège passager du véhicule automobile conformément à sa destination, est apte à être déployé par un gaz, ledit premier coussin gonflable (10) étant conçu pour être disposé à l'état non déployé dans un volant de direction ou un tableau de bord (2) du véhicule automobile, et
- un deuxième coussin gonflable (20) qui, pour la protection de l'occupant du véhicule (I), est apte à être déployé par un gaz, le deuxième coussin gonflable (20) étant conçu pour s'étendre, à l'état déployé, avec une zone de bordure (21), orientée vers l'avant (3) du véhicule, le long du pilier avant (4) du véhicule automobile, **caractérisé en ce que**
le deuxième coussin gonflable (20) comporte, à l'état déployé, une zone de bordure (21) qui s'étend le long du pilier avant (4) et qui se serre étroitement contre le pilier avant (4), de telle sorte que l'occupant du véhicule (I) peut glisser le long du deuxième coussin gonflable (20) pour parvenir sur le premier coussin gonflable (10) et non pas sur le pilier avant (4) qui s'étend obliquement derrière ledit deuxième coussin gonflable,
et le deuxième coussin gonflable (20) étant configuré et prévu pour venir en appui, à l'état déployé, avec sa zone de bordure (21) contre une zone de bordure du premier coussin gonflable (10) déployé, laquelle s'étend le long de l'axe vertical du véhicule et est orientée vers une carrosserie latérale du véhicule, de telle sorte que le premier et le deuxième coussin gonflable (10, 20) couvrent conjointement, au moins par zones, le pilier avant (4) en vue de la protection de l'occupant du véhicule (I).

2. Système de retenue des occupants d'un véhicule selon l'une quelconque des revendications précédentes, **caractérisé par** un système électronique de commande qui est configuré pour déclencher un premier générateur de gaz, associé au premier coussin gonflable (10) et destiné à déployer le premier coussin gonflable (10), et un deuxième générateur de gaz, associé au deuxième coussin gonflable (20) et destiné à déployer le deuxième coussin gonflable.

3. Système de retenue des occupants d'un véhicule selon l'une quelconque des revendications précédentes, **caractérisé par** un moyen de détection destiné à détecter une force influant sur l'avant (3) du véhicule automobile le long d'une direction des forces à la suite d'une collision, ledit moyen de détection étant configuré en particulier pour détecter l'inclinaison de cette direction des forces par rapport à l'axe longitudinal (x) du véhicule.

4. Système de retenue des occupants d'un véhicule selon la revendication 3, **caractérisé en ce que** le système électronique de commande est configuré et prévu pour déclencher tant le premier que le deuxième générateur de gaz (10, 20) afin de déployer les deux coussins gonflables (10, 20) lorsque le moyen de détection détecte une collision, au cours de laquelle l'inclinaison de la direction des forces par rapport à l'axe longitudinal du véhicule est inférieure ou égale à 30°.

5. Système de retenue des occupants d'un véhicule selon la revendication 4, **caractérisé en ce que** le système électronique de commande est configuré pour déclencher simultanément ou de façon décalée dans le temps le premier et le deuxième générateur de gaz.

6. Système de retenue des occupants d'un véhicule selon l'une quelconque des revendications précédentes, **caractérisé en ce que** le deuxième coussin gonflable (20) est conçu pour être disposé, à l'état non déployé, dans une porte latérale (5) du véhicule, associée au siège (1), en particulier au-dessous de l'allège de fenêtre (6) de ladite porte (5) du véhicule.

7. Système de retenue des occupants d'un véhicule selon l'une quelconque des revendications précédentes, **caractérisé par** un troisième coussin gonflable (30) qui est conçu pour être disposé, à l'état non déployé, dans le siège (1), ledit troisième coussin gonflable (30) étant configuré pour s'étendre, à l'état déployé, le long de la porte (5) du véhicule.

8. Système de retenue des occupants d'un véhicule selon l'une quelconque des revendications 4 à 7, **caractérisé en ce que** le système électronique de commande est configuré pour déclencher un troisième générateur de gaz, associé au troisième coussin gonflable (30) et destiné à déployer le troisième coussin gonflable (30) lorsque le moyen de détection a détecté une collision au cours de laquelle l'inclinaison de la direction des forces par rapport à l'axe longitudinal du véhicule est inférieure ou égale à 30°.

9. Procédé pour de déclencher un système de retenue des occupants d'un véhicule selon l'une quelconque des revendications précédentes, comportant les étapes :
- détection de l'inclinaison d'une direction de force influant sur l'avant (3) du véhicule automobile par rapport à l'axe longitudinal (x) du véhicule à la suite d'une collision,
- dans le cas d'une inclinaison inférieure ou égale à 30° : déploiement du premier et du deuxième coussin gonflable (10, 20),
- le deuxième coussin gonflable (20) comportant, à l'état déployé, une zone de bordure (21) qui s'étend le long du pilier avant (4) et qui se serre étroitement contre le pilier avant (4), de telle sorte que l'occupant du véhicule (I) peut glisser le long du deuxième coussin gonflable (20) pour parvenir sur le premier coussin gonflable (10) et non pas sur le pilier avant (4) qui s'étend obliquement derrière ledit deuxième coussin gonflable,
- et le deuxième coussin gonflable (20) étant configuré et prévu pour venir en appui, à l'état déployé, avec sa zone de bordure (21) contre une zone de bordure du premier coussin gonflable (10) déployé, laquelle s'étend le long de l'axe vertical du véhicule et est orientée vers une carrosserie latérale du véhicule, de telle sorte que le premier et le deuxième coussin gonflable couvrent conjointement, au moins par zones, le pilier avant en vue de la protection de l'occupant du véhicule.

10. Procédé pour déclencher un système de retenue des occupants d'un véhicule selon la revendication 9, dans lequel, dans le cas d'une inclinaison inférieure ou égale à 30°, est déployé en plus un troisième coussin gonflable (30) qui, à l'état non déployé, est disposé dans le siège (1), ledit troisième coussin gonflable (30) s'étendant, à l'état déployé, le long de la porte (5) du véhicule automobile.
